# EUROPEAN PATENT SPECIFICATION

(11) **EP 4 339 717 B1**
(45) Date of publication and mention of the grant of the patent: **01.04.2026**
(21) Application number: 23196834.8
(22) Date of filing: 12.09.2023
(51) Int. Cl.: G05B 15/02, G05B 19/042

(54) **AUTOMATIC PROVISION OF A LIST OF PREFERRED SUGGESTIONS ON A CONTROL DEVICE FOR CONTROLLING ELECTRIC OR ELECTRONIC DEVICES IN A HOME OR BUILDING**
AUTOMATISCHE BEREITSTELLUNG EINER LISTE BEVORZUGTER VORSCHLÄGE IN EINEM STEUERGERÄT ZUR STEUERUNG ELEKTRISCHER ODER ELEKTRONISCHER GERÄTE IN EINEM HAUS ODER GEBÄUDE
FOURNITURE AUTOMATIQUE D'UNE LISTE DE SUGGESTIONS PRÉFÉRÉES SUR UN DISPOSITIF DE COMMANDE POUR COMMANDER DES DISPOSITIFS ÉLECTRIQUES OU ÉLECTRONIQUES DANS UNE MAISON OU UN BÂTIMENT

(30) Priority: 13.09.2022 BE 202205728
(43) Date of publication of application: 20.03.2024
(73) Proprietor: Niko NV, 9100 Sint-Niklaas (BE)
(72) Inventor: DEVENYN, Diederik, 9820 Merelbeke (BE)
(74) Representative: Calysta NV

(56) References cited:
- WO-A1-2019/190812
- US-A1- 2019 250 781

## Description

### Technical field of the invention

The present invention relates to providing a list of preferred suggestions on a control device for controlling electric and electronic devices in home automation. More particularly, the present invention provides a method for automatically providing a list of preferred suggestions on a control device by means of gait detection and gait analysis.

### Background of the invention

Smart home and smart building technologies are based on the concept of automation and remote control by means of a home automation system. Nowadays, home automation systems are more and more used in households. For example, several functions of the home may be automatized, programmable, and/or can be controlled remotely. This improves energy efficiency, comfort, and security.

Within the home automation system, electric and/or electronic devices are controlled and different mood settings can be created by a user by activating one or more electric or electronic devices. Settings of the electric or electronic devices can be preprogrammed by the user. However, the user has to activate them himself if he wants a certain mood setting. How electric or electronic devices have to be controlled, differs from user to user and from time to time. Often, a user always wants to have the same mood setting whenever he or she performs a same activity. Then he or she always has to manually activate that certain mood setting if he or she starts that activity.

WO2019/190812 relates to an intelligent assistant device that communicates non-verbal of the presence and context of a human. The device comprises a person identifier that is particularly optimized for recognizing humans.

US20190250781 relates to a device comprising a reflective mirror surface which is configured for recognizing a user and for adapting one or more settings of a graphical user interface visible at the face of the mirror.

### Summary of the invention

It is an object of embodiments of the present invention to automatically provide a list of preferred suggestions on a control device for controlling electric and/or electronic devices in a home or a building.

The above objective is accomplished by a method and device according to embodiments of the present invention.

The present invention provides a method for automatically providing, on a control device and to a person within a radar detection area of the control device, e.g. a person approaching the control device, a list of preferred suggestions for controlling at least one electric or electronic device in a home or building. With a list of preferred suggestions is meant a list of frequently used actions for controlling the at least one electric or electronic device and/or actions for controlling the at least one electric or electronic device indicated as preferred actions. With automatically providing the list of preferred suggestions is meant that the list of preferred suggestions is provided without any action of the person being required, except for approaching the control device.

The method comprises determining, by means of a radar sensor, a specific gait of a person walking within a radar detection area of the control device, e.g. walking towards the control device, analysing the specific gait of the person and determining a corresponding specific gait profile, from the specific gait profile, identifying the person, and automatically providing, on a user interface of the control device, the list of preferred suggestions corresponding to the identified person.

A gait is a pattern of limb movements made during locomotion of a person. Or in other words, gait may also be referred to as body movement when a person is walking or, in general, is moving. Different gait patterns or profiles are characterized by differences in limb-movement patterns, overall velocity, forces, kinetic and potential energy cycles, and changes in the contact with the ground. Different persons have different gait patterns or profiles. Hence, each person may have a specific gait and thus a specific gait profile that is characteristic for that person. Also a person sitting in a wheelchair has a specific gait, i.e. a specific way of moving, and hence can also be recognized by the method according to embodiments of the invention.

The method, furthermore, comprises: .
- setting up a library of at least one identifiable person (P) with a corresponding gait profile or gait pattern, and
- storing that library in a memory (8) of the control device system (10).

The method, furthermore, comprises:
automatically adding a person to the library of identifiable persons in the memory (8) of the control device system (10) when the person is detected multiple subsequent times by the radar sensor (4) for which no corresponding gait profile is available in the memory (8) of the control device system (10),

An advantage of a method according to embodiments of the invention is that it brings more comfort to a person using the control device, as his or her favorite preferences of using the electric or electronic device are automatically shown on the control device when that person approaches the control device. The person just has to select one or more of his or her provided preferences and the corresponding at least one electric or electronic device is activated and/or controlled accordingly.

According to embodiments of the invention, the method may further comprise activating at least one suggestion from the preferred suggestions by selecting that at least one preferred suggestion on the control device.

The preferred suggestions may be ordered, for example, with the mostly used suggestion on top of the list, or may be ordered in any other suitable way. The list of preferred suggestions may also be different depending on the day of the week, or the time of the day.

The list of preferred suggestions may comprise one or more of preferred actions for controlling the at least one electric or electronic device, preferred settings for the at least one electric or electronic device, frequently used icons, favourite moods or the like.

According to embodiments of the invention, analyzing the specific gait of the person may be done based on one or more gait features or gait characteristics such as e.g. velocity, arm movement, step movement, ... detected by the radar sensor. For example, according to embodiments of the invention, analyzing the specific gait of the person may further comprise identifying the height of a specific body part (e.g. eyes, forehead, top of head, etc.) and tracking that height evolution over time.

According to still further embodiments, a person may decline the shown list of preferred suggestions, and manually activate a setting of at least one electric or electronic device of his or her preference at that moment. Therefore, the method may furthermore comprise declining the shown list of preferred suggestion, thereby allowing to manually activate a setting of at least one electric or electronic device.

Hence, the person can still determine which settings he or she wants at that moment, and is never restricted to the list of preferred suggestions that is shown.

According to embodiments of the invention, the method may further comprise setting up a library of at least one identifiable person with a corresponding gait profile or gait pattern, and storing that library in a memory of the control device system. According to other embodiments of the invention, the library may be stored in the cloud.

The method may, according to further embodiments, still further comprise, before determining a specific gait of a person walking towards the control device, storing a list of preferred suggestions for at least one person.

Storing lists of preferred suggestions can be done in several ways. For example, a list of preferred suggestions can be programmed manually and then be stored. However, storing lists of preferred suggestions can also be done by the control device system itself. The control device system keeps track of all manually settings of a person and, after e.g. a few weeks, the control device system can draw up a list with preferred suggestions.

This may comprise storing manually entered settings of a same person, and from the stored manually entered settings, creating a new favourites list for that person.

When a person is not identifiable, the method according to the invention comprises, upon not being able to identify the person walking towards the control device multiple subsequent times, automatically adding that person to the list of identifiable persons.

In a further aspect, the present invention also provides a control device system for controlling at least one electric or electronic device in a home or building based on gait profiling detection, the control device system comprising a control device with a user interface, a radar sensor for determining a specific gait of a person within a radar detection area of the control device, and a controller adapted for performing the method according to embodiments of the invention. According to particular embodiments, the invention may provide a control device system for controlling electric or electronic devices in a home or a building based on gait detection or gate profiling. The control device system comprises a control device with a user interface, a radar sensor for determining a specific gait of a person within a radar detection area of the control device, e.g. a person walking towards the control device, a memory for storing a list of preferred suggestions for at least one person, a controller adapted for analysing the specific gait of the person and determining a corresponding specific gait profile, and a decision engine for, from the specific gait profile, identifying the person and link, the list with preferred suggestions corresponding to the identified person.

The controller may further be adapted to, upon activating at least one suggestion from the list of preferred suggestions, by selecting that at least one suggestion on the control device, sending a signal to the at least one electric or electronic device for activating it.

According to embodiments of the invention, the radar sensor may be part of the control device, e.g. integrated in the housing of the control device, or may be a standalone radar sensor device, which may be operably connected to the control device via a wired or wireless communication protocol or via the cloud.

According to embodiments of the invention, the controller may be located in a same device as the radar sensor. According to such embodiments, when the radar is part of the control device, the controller will be located in the control device, when the radar is a standalone radar sensor device, the controller will be part of the radar senor device.

According to embodiments of the invention, the control device may be a switch, a mobile phone, a tablet, a sensor device, or the like.

The present invention also provides a computer program comprising instructions to cause a controller to execute the method according to embodiments of the invention and a computer-readable medium having stored thereon the computer program according to embodiments of the invention.

### Brief description of the drawings

It has to be noted that same reference signs in the different figures refer to same, similar or analogous elements.
Fig. 1 illustrates a person approaching a control device according to embodiments of the invention.
Figs. 2 and 3 schematically illustrate a control device system according to embodiments of the invention.
Fig. 4 schematically illustrates a method according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

A gait is a pattern of limb movements made during locomotion of a person. Or in other words, gait may also be referred to as body movement when a person is walking or, in general, is moving. Also a person sitting and moving in a wheelchair has a specific gait, i.e. a specific way of moving, and hence can be recognized by the method according to embodiments of the invention. Different gait patterns or profiles are characterized by differences in limb-movement patterns, overall velocity, forces, kinetic and potential energy cycles, and changes in the contact with the ground. Different persons have different gait patterns or profiles. Hence, each person may have a specific gait and thus a specific gait profile that is characteristic for that person. Based on that specific gait pattern or profile, a person can be recognized. That is what the present invention uses to automatically provide on a control device and to a person approaching the control device, a list of preferred suggestions for controlling at least one electric or electronic device in a home or building for that specific person.

Therefore, the present invention provides a method for automatically providing, on a control device and to a person approaching the control device, a list of preferred suggestions for controlling at least one electric or electronic device in a home or building. The method comprises determining, by means of a radar sensor, a specific gait of a person walking within a radar detection area of the control device, analysing the specific gait of the person and determining a corresponding specific gait profile, from the specific gait profile, identifying the person, and automatically providing, on a user interface of the control device, the list of preferred suggestions corresponding to the identified person.

With a list of preferred suggestions is meant a list of frequently used actions for controlling the at least one electric or electronic device and/or actions for controlling the at least one electric or electronic device indicated as preferred actions. With automatically providing the list of preferred suggestions is meant that the list of preferred suggestions is provided without any action of the person being required, except for walking within the radar detection area of the control device, e.g. approaching the control device.

An advantage of a method according to embodiments of the invention is that it brings more comfort to a person using the control device, as his or her favourite preferences of using the electric or electronic device are automatically shown on the control device when that person approaches the control device. The person just has to select one or more of his or her provided preferences and the corresponding at least one electric or electronic device is activated and/or controlled accordingly.

The present invention will hereinafter be described by means of different embodiments. It has to be understood that these embodiments are only for the ease of understanding the invention and are not intended to limit the invention in any way.

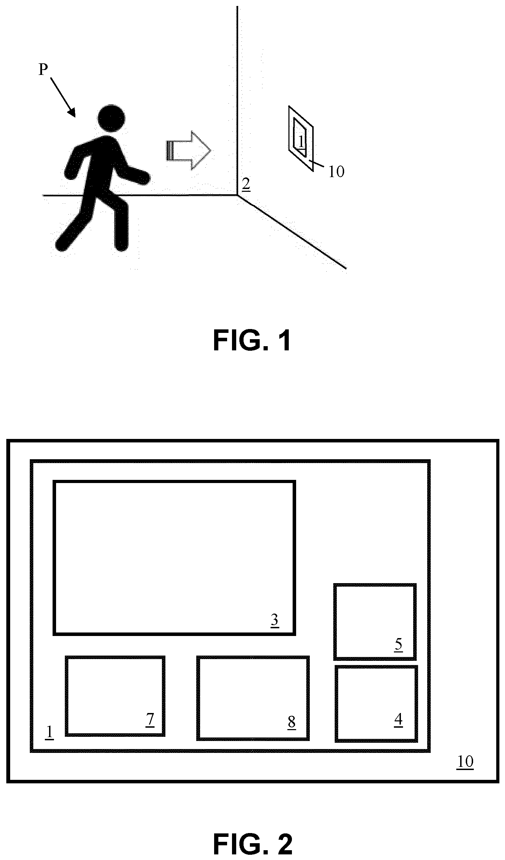

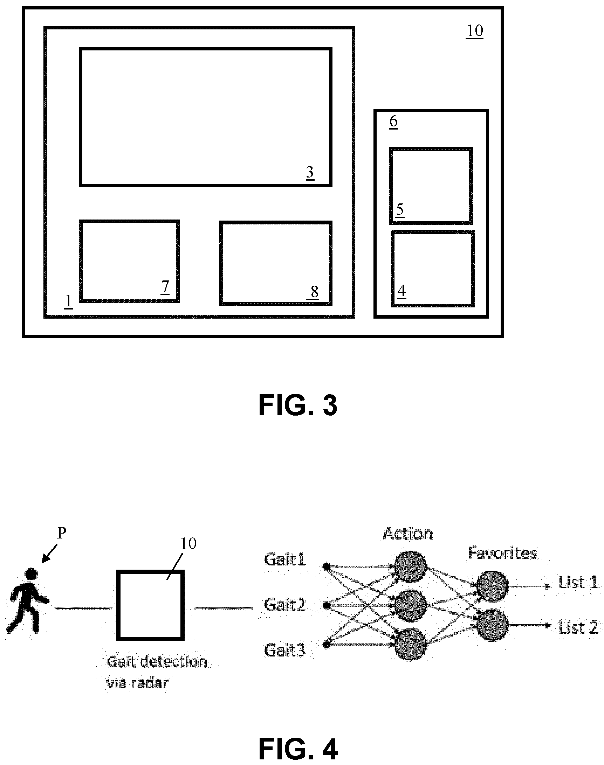

Fig. 1 illustrates a person P walking within the radar detecting area of a control device 1, in the example given walking towards the control device 1, which is part of a control device system 10 according to embodiments of the invention. The control device system 10 comprises a control device 1 with a user interface 3 (see Figs. 2 and 3). The control device 1 may be provided onto a wall 2 (as illustrated in Fig. 1) or on a ceiling in a home or a building, or may be a wearable device. The control device 1 may, for example but not limited to, be a switch, a mobile phone, a tablet, a sensor device, or the like.

The control device system 10 further comprises a radar sensor 4 for determining a specific gait of a person P walking within a radar detection area of the control device 1, e.g. walking towards the control device 1. According to embodiments of the invention, the radar sensor 4 may be part of the control device 1, and may thus be built-in in the control device 1 and may be integrated in the housing of the control device 1, or may be a standalone device which may be operably connected to the control device via a wired or wireless communication protocol or via the cloud. In case of the radar device 4 being a standalone device, the radar device 4 may be located in a lighting device on a ceiling of the home or building, or may be located on any other suitable location in the home or building, preferably, but not necessarily in the neighbourhood of the control device 1.

When a person P comes in the radar detection area of the control device 1, e.g. is approaching the control device 1, the radar sensor 4 will detect the movement of that person P. In a controller 5, the gait detected by the radar sensor 4, will be analysed and from the analysis, a corresponding specific gait profile or gait pattern will be determined. The controller 5 may be located in a same device as the radar sensor 4. Hence, when the radar sensor 4 is part of the control device 1, as illustrated in Fig. 2, the controller 5 will also be located in the control device 1. When the radar sensor 4 is a standalone device, as illustrated in Fig. 3, the controller 5 will be close to the radar sensor 4. In that case, the radar sensor 4 and the controller 5 may together form a radar sensor device 6.

Analysing the specific gait of a person to determine the gait profile or gait pattern may be done based on features of the gait of the person P, such as e.g. velocity, arm movement, step movement, and the like, detected by the radar sensor 4. For example, according to embodiments of the invention, analysing the specific gait of the person may further comprise identifying the height of a specific body part, e.g. eyes, forehead, top of head, etc., and tracking that height evolution over time.

From the specific gait profile or gait pattern, determined in the controller 5, the person P may be identified. This is done in a decision engine 7 of the control device system 10. For being able to do so, a library of identifiable persons comprising at least one person P with corresponding gait profile or gait pattern has to be stored in a memory 8 of the control device system 10. This may be done manually during programming the control device system by a person P, before starting using the control device system 10, by setting up the library by adding as many persons to the library as there will be users of the control device system 10 in the home or building. For example, in case of a family of four, four persons and their corresponding gait profile may be added to the library.

According to other embodiment, adding at least one person P to the library of identifiable persons P may also be done automatically. For example, whenever, during use of the control device system 10, a new person is detected by the radar sensor 4, i.e. when a person is detected multiple subsequent times by the radar sensor 4 for which no corresponding gait profile is available in the memory 8 of the control device system 10, and thus when the control device system 10 is not able to identify the person walking towards the control device 1, that person P may be automatically added to the list of identifiable persons in the memory 8 of the control device system 10.

The control device 1 can be in a learning mode and in an operational mode. In the learning mode a first detection of a specific gait profile or pattern is recorded and stored in the library of identifiable persons P, and given an identifier. This identifier may be customizable by the user and may comprise names of users or may comprise indications as "dad", "daughter" and the like.

Subsequent gait characteristics are recorded and compared to the library and in case a match is found, a prompt is shown asking the user to confirm the match. Optionally in case no match is found the user is prompted to create a new identifier for a new library entry. During the learning mode, a reinforcement learning model may be applied to improve the criteria defining the gait profile or gait pattern of a user.

The library of identifiable persons P can be changed at any time by manually removing or adding persons P with their corresponding gait profile or gait pattern or, as described above, by automatically adding non-identifiable persons to the library of identifiable persons P.

Further, also a list of preferred suggestions for at least one person P needs to be stored in the memory 8 of the control device system 10 before the control device system 10 can be used according to embodiments of the invention. Storing a list of preferred suggestions for at least one person P can be done in several ways. According to one way, a list of preferred suggestions can be programmed manually by means of the user interface 3 on the control device 1 and can then be stored in the memory 8 of the control device system 10. Additional preferred suggestions to existing lists can be added manually at any time. However, storing lists of preferred suggestions or adding suggestions to an existing list of preferred suggestions can also be done by the control device system 10 itself. The control device system 10 can keep track of all settings chosen by the person P from the list of preferred suggestions provided by the control device system 10 or from all settings done by that person P to, for example, overrule provided preferred suggestions. After a particular time, e.g. after a few weeks, the control device system 10 can in that way update existing lists of preferred suggestions or set up new lists of preferred suggestions and store those updated or new lists in the memory 8 of the control device system 10.

After the person P is identified by means of its gait profile or gait pattern, a list of preferred suggestions corresponding to the identified person P is automatically provided on the user interface 3 of the control device 1. With automatically providing a list of preferred suggestions is meant that the list of preferred suggestions is provided without any action of the person P being required, except for approaching the control device 1. The control device 1 may preferably comprise a screen and the suggestions are displayed on the screen of the control device 1.

The fact that the list of preferred suggestions is automatically provided to the person P upon identifying that person P based on its gait profile or gait pattern, brings more comfort to the person P, as from the moment person P approaches the control device 1 that he or she wants to use for setting at least one electric or electronic device in his or her home or building, he or she immediately sees his or her preferred settings for those electric or electronic devices and just has to choose one of the suggestions by selecting that preferred suggestion on the user interface 3 of the control device 1.

The list of preferred suggestions may comprise one or more of preferred actions for controlling the at least one electric or electronic device, preferred settings for the at least one electric or electronic device, frequently used icons representative for the one or more preferred actions and/or suggestions, favourite moods or the like. The preferred suggestions can be any preferred way of using the control device 1. The preferred suggestions can comprise the most frequently used icons, such as, for example but not limited to, icons to control lighting devices, roller blinds, air-conditioning devices and/or heating devices, .... But the preferred suggestions can also comprise preferred settings for these electric or electronic devices. For example, when the person P comes home at e.g. 18h from work on a week day, and he or she approaches the control device 1, the preferred settings for that moment in time can be shown as preferred suggestions. These suggestions can, for example, be different from suggestions that will be provided, for example, at the same time on a day in the weekend. Further, also combined settings for more than one electric or electronic device can be shown which together create a preferred mood.

The list of preferred actions may be ordered, for example, with the mostly used suggestion on top of the list, with the suggestion most interesting for that time of the day on top of the list, or in any other suitable way as preferred by the user. As already indicated, the list of preferred suggestions may also be different depending on the day of the week or the time of the day.

According to embodiments of the invention, all of the above mentioned suggestions and even more can be provided in the list that is automatically shown to the person, but this is not necessarily so. According to other embodiments, only a selection of the above mentioned suggestions can be shown. This is something that the person P can determine when programming his or her control device system 10 or even afterwards, when the control device system 10 is already in use for some time. As already mentioned above, suggestions can be added to the list of preferred suggestions at all times, either manually by the person P or automatically by the control device system 10 itself.

The above described method is schematically illustrated in Fig. 4 for clarifying purposes only. To summarize, when a person P approaches a control device 1 that is part of a control device system 10, the radar sensor 4 in the control device system 10 detects a particular gait of that person P. The particular gait is analysed and a corresponding gait profile or gait pattern is determined. From a library of identifiable persons with corresponding gait profiles or gait patterns, in Fig. 4 illustrated as Gait1, Gait2 and Gait3, the gait profile or gait pattern from the person P approaching the control device 1 is correlated with the corresponding person and in that way the person P approaching the control device 1 is identified. From all possible actions that can be done with the control device 1, favourites are extracted and lists with preferred suggestions (List 1, List 2) are stored in the memory 8 of the control device system 10, the lists being correlated with the particular gait profiles or gait patterns. Once the person P is identified, his or her list with preferred actions is being determined and is provided as a list of preferred suggestions on the user interface 3 of the control device 1.

Upon the list of preferred suggestions being provided on the user interface 3 of the control device 1, the person P may decline the shown list if he or she does not want any of the suggestions at that time and may then manually activate a setting of the at least one electric or electronic device as he or she wants. Hence, the person P can still determine which settings he or she wants at that moment, and is never restricted to the list of preferred suggestions automatically shown on the user interface 3 of the control device 1.

## Claims

1. A method for automatically providing, on a control device (1), a list of preferred suggestions for controlling at least one electric or electronic device in a home or building for a particular person (P), the method comprising:
- determining, by means of a radar sensor (4), a specific gait of the person (P) walking within a radar detection area of the control device (1),
- analysing the specific gait of the person (P) and determining a corresponding specific gait profile,
- from the specific gait profile, identifying the person (P), and
- automatically providing, on a user interface (3) of the control device (1), the list of preferred suggestions corresponding to the identified person (P),
the method, furthermore, comprising:
- setting up a library of at least one identifiable person (P) with a corresponding gait profile or gait pattern, and
- storing that library in a memory (8) of a control device system (10),
**characterized in that** the method comprises:
automatically adding a person to the library of identifiable persons in the memory (8) of the control device system (10) when the person is detected multiple subsequent times by the radar sensor (4) for which no corresponding gait profile is available in the memory (8) of the control device system (10),

2. A method according to claim 1, further comprising activating at least one suggestion from the preferred suggestions by selecting that at least one preferred suggestion on the user interface (3) the control device (1).

3. A method according to claim 1 or 2, wherein the list of preferred suggestions comprises one or more of preferred actions for controlling the at least one electric or electronic device, preferred settings for the at least one electric or electronic device, frequently used icons, favourite moods.

4. A method according to any of the previous claims, further comprising declining the shown list of preferred suggestion, thereby allowing to manually activate a setting of at least one electric or electronic device.

5. A control device system (10) for controlling at least one electric or electronic device in a home or a building based on gait profile detection, the control device system (10) comprising:
- a control device (1) with a user interface (3),
- a radar sensor (4) for determining a specific gait of a person walking towards the control device (1),
- a controller (5) adapted for performing the method according to any of the previous claims.

6. A control device system (10) according to claim 5, wherein the radar sensor (4) is part of the control device (1) or is a standalone radar sensor (4).

7. A control device system (10) according to claims 5 or 6, wherein the controller (5) is located in a same device as the radar sensor (4).

8. A control device system (10) according to any claims 5 to 7, wherein the control device (5) is one of a switch, a mobile phone, a tablet, a sensor device.

9. A computer program comprising instructions to cause the controller (5) of one of claims 5 to 8 to execute the method of any of claims 1 to 4.

10. A computer-readable medium having stored thereon the computer program of claim 9.

## Patentansprüche

1. Verfahren zum automatischen Bereitstellen, an einer Steuervorrichtung (1), einer Liste von bevorzugten Vorschlägen zum Steuern von mindestens einer elektrischen oder elektronischen Vorrichtung in einem Haus oder Gebäude für eine bestimmte Person (P), wobei das Verfahren Folgendes umfasst:
- Bestimmen, durch einen Radarsensor (4), eines spezifischen Gangs der Person (P), die in einem Radarerfassungsbereich der Steuervorrichtung (1) läuft,
- Analysieren des spezifischen Gangs der Person (P) und Bestimmen eines entsprechenden spezifischen Gangprofils,
- aus dem spezifischen Gangprofil Identifizieren der Person (P) und
- automatisches Bereitstellen, an einer Benutzeroberfläche (3) der Steuervorrichtung (1), der Liste von bevorzugten Vorschlägen entsprechend der identifizierten Person (P),
wobei das Verfahren des Weiteren Folgendes umfasst:
- Aufbauen einer Bibliothek aus mindestens einer identifizierbaren Person (P) mit einem entsprechenden Gangprofil oder Gangmuster und
- Speichern dieser Bibliothek in einem Speicher (8) eines Steuervorrichtungssystems (10),
**dadurch gekennzeichnet, dass** das Verfahren Folgendes umfasst:
automatisches Hinzufügen einer Person zu der Bibliothek aus identifizierbaren Personen im Speicher (8) des Steuervorrichtungssystems (10), wenn die Person mehrere aufeinanderfolgende Male durch den Radarsensor (4) erfasst wird, für die kein entsprechendes Gangprofil im Speicher (8) des Steuervorrichtungssystems (10) verfügbar ist.

2. Verfahren nach Anspruch 1, ferner umfassend das Aktivieren von mindestens einem Vorschlag aus den bevorzugten Vorschlägen durch Auswählen dieses mindestens einen bevorzugten Vorschlags an der Benutzeroberfläche (3) der Steuervorrichtung (1).

3. Verfahren nach Anspruch 1 oder 2, wobei die Liste aus bevorzugten Vorschlägen eine oder mehrere bevorzugte Handlungen zum Steuern der mindestens einen elektrischen oder elektronischen Vorrichtung, bevorzugte Einstellungen für die mindestens eine elektrische oder elektronische Vorrichtung, häufig verwendete Symbole, Lieblingsstimmungen umfasst.

4. Verfahren nach einem der vorhergehenden Ansprüche, ferner umfassend das Ablehnen der gezeigten Liste aus bevorzugten Vorschlägen, wodurch zugelassen wird, dass eine Einstellung der mindestens einen elektrischen oder elektronischen Vorrichtung manuell aktiviert wird.

5. Steuervorrichtungssystem (10) zum Steuern von mindestens einer elektrischen oder elektronischen Vorrichtung in einem Haus oder einem Gebäude basierend auf einer Gangprofilserfassung, wobei das Steuervorrichtungssystem (10) Folgendes umfasst:
- eine Steuervorrichtung (1) mit einer Benutzeroberfläche (3),
- einen Radarsensor (4) zum Bestimmen eines spezifischen Gangs einer Person, die zur Steuervorrichtung (1) läuft,
- eine Steuerung (5), die angepasst ist zum Durchführen des Verfahrens nach einem der vorhergehenden Ansprüche.

6. Steuervorrichtungssystem (10) nach Anspruch 5, wobei der Radarsensor (4) Teil der Steuervorrichtung (1) oder ein eigenständiger Radarsensor (4) ist.

7. Steuervorrichtungssystem (10) nach Ansprüchen 5 oder 6, wobei sich die Steuerung (5) in einer gleichen Vorrichtung wie der Radarsensor (4) befindet.

8. Steuervorrichtungssystem (10) nach einem der Ansprüche 5 bis 7, wobei die Steuervorrichtung (5) eines aus einem Schalter, einem Mobiltelefon, einem Tablet, einer Sensorvorrichtung ist.

9. Computerprogramm, umfassend Anweisungen, um zu verursachen, dass die Steuerung (5) nach einem aus Ansprüchen 5 bis 8 das Verfahren nach einem aus Ansprüchen 1 bis 4 ausführt.

10. Computerlesbares Medium, das darauf das Computerprogramm nach Anspruch 9 speichert.

## Revendications

1. Procédé pour fournir automatiquement, sur un dispositif de commande (1), une liste de suggestions préférées pour commander au moins un dispositif électrique ou électronique dans un foyer ou un bâtiment pour une personne particulière (P), le procédé comprenant :
- la détermination, au moyen d'un capteur radar (4), une démarche spécifique de la personne (P) marchant dans les limites d'une zone de détection radar du dispositif de commande (1),
- l'analyse de la démarche spécifique de la personne (P) et la détermination d'un profil de démarche spécifique correspondant,
- à partir du profil de démarche spécifique, l'identification de la personne (P), et
- la fourniture automatique, sur une interface utilisateur (3) du dispositif de commande (1), de la liste de suggestions préférées correspondant à la personne identifiée (P),
le procédé comprenant en outre :
- l'établissement d'une bibliothèque d'au moins une personne identifiable (P) avec un profil de démarche ou un mode de démarche correspondant, et
- le stockage de cette bibliothèque dans une mémoire (8) d'un système de dispositif de commande (10),
**caractérisé en ce que** le procédé comprend :
l'ajout automatique d'une personne à la bibliothèque de personnes identifiables dans la mémoire (8) du système de dispositif de commande (10) lorsque la personne est détectée de multiples fois subséquentes par le capteur radar (4) pour laquelle aucun profil de démarche correspondant n'est disponible dans la mémoire (8) du système de dispositif de commande (10).

2. Procédé selon la revendication 1, comprenant en outre l'activation d'au moins une suggestion parmi les suggestions préférées en sélectionnant cette au moins une suggestion préférée sur l'interface utilisateur (3) du dispositif de commande (1).

3. Procédé selon la revendication 1 ou 2, dans lequel la liste de suggestions préférées comprend un ou plusieurs éléments parmi des actions préférées pour commander l'au moins un dispositif électrique ou électronique, des réglages préférés pour l'au moins un dispositif électrique ou électronique, des icônes fréquemment utilisées, des ambiances favorites.

4. Procédé selon quelconques des revendications précédentes, comprenant en outre le refus de la liste présentée de suggestions préférées, ainsi permettant d'activer manuellement un réglage d'au moins un dispositif électrique ou électronique.

5. Système de dispositif de commande (10) pour commander au moins un dispositif électrique ou électronique dans un foyer ou un bâtiment sur la base d'une détection de profil de démarche, le système de dispositif de commande (10) comprenant :
- un dispositif de commande (1) avec une interface utilisateur (3),
- un capteur radar (4) pour déterminer une démarche spécifique d'une personne marchant vers le dispositif de commande (1),
- une unité de commande (5) adaptée pour réaliser le procédé selon de quelconques des revendications précédentes.

6. Système de dispositif de commande (10) selon la revendication 5, dans lequel le capteur radar (4) fait partie du dispositif de commande (1) ou est un capteur radar autonome (4).

7. Système de dispositif de commande (10) selon les revendications 5 ou 6, dans lequel l'unité de commande (5) est située dans un même dispositif que le capteur radar (4).

8. Système de dispositif de commande (10) selon de quelconques revendications 5 à 7, dans lequel le dispositif de commande (5) est un élément parmi un interrupteur, un téléphone mobile, une ardoise, un dispositif capteur.

9. Programme d'ordinateur, comprenant des instructions pour amener l'unité de commande (5) d'une des revendications 5 à 8 à exécuter le procédé de quelconques des revendications 1 à 4.

10. Support lisible par ordinateur ayant, stocké sur celui-ci, le programme d'ordinateur de la revendication 9.
